# EUROPEAN PATENT APPLICATION

(11) **EP 2 252 023 A1**
(43) Date of publication of application: **17.11.2010**
(21) Application number: 09726510.2
(22) Date of filing: 19.03.2009
(51) Int. Cl.: H04L 12/66

(54) **METHOD, DEVICE AND SYSTEM FOR PROCESSING DIAL-UP INFORMATION IN THE MEDIA STREAM**

(30) Priority: 31.03.2008 CN 200810066441
(71) Applicant: Huawei Technologies Co., Ltd., Longgang District, Shenzhen Guangdong 518129 (CN)
(72) Inventor: LIN, Yangbo, Shenzhen Guangdong 518129 (CN)
(74) Representative: Thun, Clemens
(86) International application number: PCT/CN2009/070893
(87) International publication number: WO 2009/121268

(57) **Abstract**

The embodiments of the present invention disclose a method, device and system for processing dial information in a media stream. The method includes: receiving, by a media gateway, a media stream carrying dial information; and remaining or removing the dial information carried in the media stream according to a dial information removal property, where the dial information removal property is set by the media gateway according to an instruction from a media gateway controller oris preset on the media gateway. According to the embodiments of the present invention, the dial information removal property is set by the media gateway according to the instruction from the media gateway controller or is present on the media gateway so that the dial information in the media stream can be removed or remained by the media gateway according to the dial information removal property.

## Description

The present application claims priority to Chinese Patent Application No. 200810066441.6 filed to the (Chinese Patent Office on March 31, 2008, and titled as "Method and Device for Processing Dial Information in a Media Stream", which is incorporated herein by reference in its entirety.

### FIELD OF THE INVENTION

The embodiments of the present invention relates to the technical field of communications, and more particularly to processing of dial information in a media stream under architecture in which a service is separated from a bearer.

### BACKGROUND OF THE INVENTION

A media gateway controller (MGC) and a media gateway (MG) are two key components in a packet network under the architecture in which a service is separated from a bearer. The MGC is responsible for service control, and the MG is responsible for media bearer. Therefore, a service control plane is separated from a media bearer plane to share network resources adequately, simplify apparatus update and service expansion, and reduce costs of development and maintenance.

Under the control of the MGC, the MG can establish a media stream transmission with other apparatus such as a user agent (UA) apparatus representing a user. In some service scenarios, the MG serves as a media server to provide services for the user and the interchange of information occurs between the MG and the UA. A typical scenario is that the media server plays a tone asking the user to input information about a card number and/or a password, and then the user inputs the information by dialing, where the information is generally transmitted to the MG from the UA in a media stream in the form of Dual Tone Multi Frequency (DTMF) digitals. The MG needs to extract, from the received media stream, the DTMF digital information, and if the DTMF digital information is not necessary for further transmission or processing of the media stream, the DTMF digital information shall be removed from the media stream; if the DTMF digital information is not removed from the media stream in such case, the problems may arise of waste of processing capability and leakage of sensitive information, and so on.

The inventors recognized that the existing technology has at least the following problems:
Under the architecture in which the MGC is separated from the MG, there lacks an effective mechanism that can be used for the MGC to control the MG to remove the dial information from the media stream.

### SUMMARY OF THE INVENTION

The embodiments of the present invention provide a method, device and system for processing dial information in a media stream so that the media gateway can process the dial information in the media stream.

To achieve the object of the present invention, an embodiment of the present invention provides a method for processing dial information in a media stream. The method includes: receiving, by a media gateway, a media stream carrying dial information; and remaining or removing the dial information carried in the media stream according to a dial information removal property, where the dial information removal property is set by the media gateway according to an instruction from a media gateway controller, or is preset on the media gateway.

Another embodiment of the present invention provides a media gateway. The media gateway includes: a property setting unit, configured to set a dial information removal property according to an instruction from a media gateway controller or configured to preset a dial information removal property on the media gateway; and a processing unit, configured to remove or remain dial information according to the dial information removal property when a media stream carrying the dial information is received.

Still another embodiment of the present invention provides a media gateway controller. The media gateway controller includes a command sending unit that is configured to send a command to a media gateway to instruct the media gateway to set a dial information removal property.

Yet still another embodiment of the present invention provides a system for processing dial information in a media stream. The system includes a media gateway controller and a media gateway, where the media gateway controller is configured to send a command to the media gateway to instruct the media gateway to set a dial information removal property, and the media gateway is configured to set the dial information removal property according to the instruction from the media gateway controller or to preset a dial information removal properly on the media gateway, and remove or remain dial information carried in a media stream according to the dial information removal property when the media stream carrying the dial information is received.

Compared with the existing technology, the embodiments of the present invention have at least the following advantages:
By using the method and device for processing dial information in a media stream according to the embodiments of the present invention, the dial information removal property can be set by the media gateway controller that sends a command to the media gateway or by presetting on the media gateway as required so that the media gateway can remove the dial information from the media stream or remain the dial information in the media stream according to the dial information removal! property.

### BRIEF DESCRIPTION OF THE ORAWINGS

Fig.1 is a schematic diagram illustrating the networking of an MGC and MGs according to an embodiment, of the present invention;
Fig.2 is a flowchart illustrating a procedure according to an embodiment of the present invention;
Fig.3 is a flowchart illustrating a procedure according to another embodiment of the present invention; and
Fig.4 is a diagram illustrating a system according to an embodiment of the present invention.

### DETAILED DESCRIPTION OF THE EMBODIMENTS

To explain the technical solutions of the present invention, the present invention is described in detail below with reference to the drawings and the exemplary embodiments.

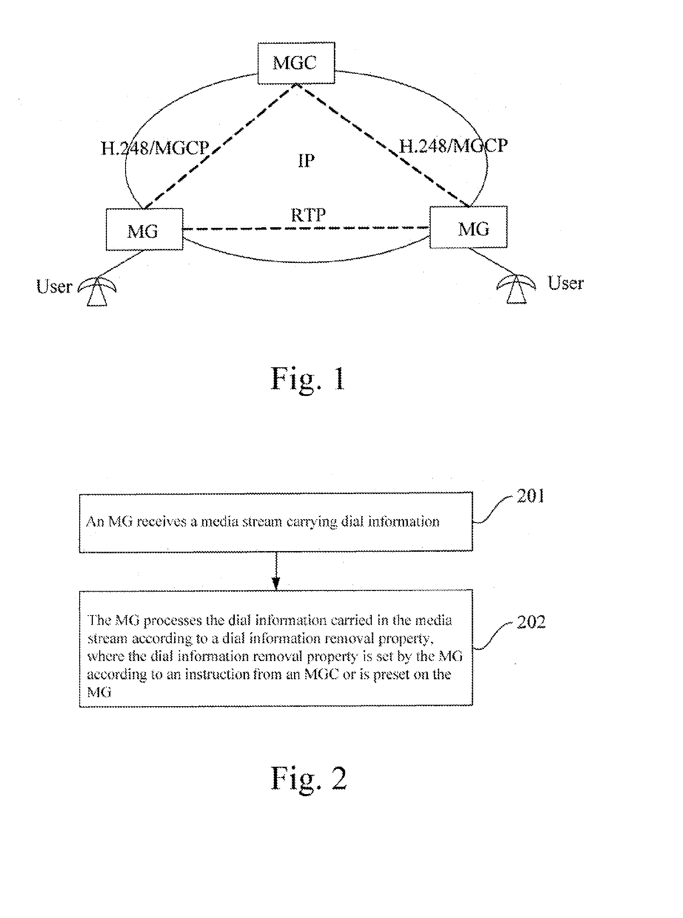

Fig.1 is a schematic diagram illustrating the networking of a media controller (MGC) and mediate gateways (MGs) under the architecture in which a service is separated from a bearer according to an embodiment of the present invention.

A (media) gateway control protocol is a main protocol used for communication between the MG and the MGC, such as a Gateway Control Protocol H.248.MeGaCo and a Media Gateway Control Protocol (MGCP) to be utilized widely.

For example, in the H.248, various resources on the MG are abstracted as Termination. Termination is further classified into a Physical termination and an Ephemeral termination. The Physical termination represents some physical entities of semi-permanent existence, such as a TDM timeslot, and the Ephemeral termination represents some public resources to be ephemerally applied for use and released after the use, such as an RTP stream. The MG as a whole is represented as a special termination referred to as a Root termination. The association between terminations is abstracted as Context. The Context may involve a plurality of terminations and thus Topology is used for describing the relationship between the terminations. A termination that has not been associated with other termination, is involved in a special context referred to as a Null context.

according to the preceding abstract connection model, the interaction between the service and bearer practically refers to an operation on the Termination and the Context. Such an operation is implemented with a Request and a Reply for Commands between the MGC and the MG. The types of the Commands include "Add", "Modify", "Subtract", "Move", "AuditValue"_{,} "AuditCapabilities", "Notify" and "ServiceChange", Parameters of the Commands, also referred to as Descriptors, are classified into "Property", "Signal"', "Event", "Statistic", etc. For convenience, the parameters having service correlation are logically aggregated into a Package.

The control by the MGC over the MG may be directed on the termination or the stream on the termination. A characteristic not unique to a stream on the termination, such as ServiceState and EventBufferControl, is included in a TermiantionState descriptor. A characteristic unique to a stream on the termination is included in a Media descriptor. The Media descriptor includes a series of Stream descriptors, each of which is used for a single stream and includes a LocalControl descriptor, a Local descriptor and a Remote descriptor. The LocalControl descriptor includes the control information related to the stream, such as Mode, ReserveGroup and ReserveValue, The Local descriptor and the Remote descriptor include the features of the streams received by the local termination and the Remote termination respectively, in the form of the Session Description Protocol (SDP), where the features are such as an address and a port, and coding and decoding algorithms.

Therefore, to make the MGC to control the MG to remove the dial information from the media stream, it is necessary to extend the (media) gateway control protocol. The extension method is described as follows:
A property is used to indicate whether the dial information, such as a DTMF digital, needs to be removed from the media stream. This property may be defined in an existing Package or a new Package in the form of "package identification/properry identification". For example, the new package is called "Media Stream Dial Information Removal package" which is also referred to as msdir, and the property is called "Dial Information Removal" which is also referred to as dir, and they are used in the form of "msdir/dir".

The "msdir/dir" property is of a Boolean type. The value "ON" of the property indicates that the dial information is removed from the media stream, and the value "OFF" of the property indicates that the dial information is not removed from the media stream. When the property is not set, the default value "OFF" of the property is used. The property is set for a certain stream to decide whether the dial information is removed or not from the stream. Thus, the property is used in the LocalControl descriptor, which is set to a certain stream to contain the control information for the stream.

When the MGC needs to perform control to remove the dial information from a media stream on the MG, the MGC sets the preceding dir property to the value "ON" on the MG The MGC can send the setting of the property by using a command such as Add, Move and Modify, where the setting of the property is carried in the LocalControl descriptor for the media stream. After receiving the dial information removal property from the MGC, the MG remove the detected dial information from the media stream before sending the media stream to the subsequent transmission (for example, other terminations) or processing (for example, code conversion) stage. When the MGC sets the preceding dir property to the value "OFF", the MG does not remove the dial information from the media stream. When the MGC does not set a value of the preceding dir property, the MG performs a process by taking the default value "OFF" of the dir property.

Fig.2 illustrates a procedure according to an embodiment of the present invention. The procedure is described in detail as follows:
Step 201: An MG receivers a media stream carrying dial information.
Step 202: The MG professes the dial information carried in the media stream according to a dial information removal property, where the dial information removal property is set by the MG according to an instruction from an MGC or is preset on the MG.

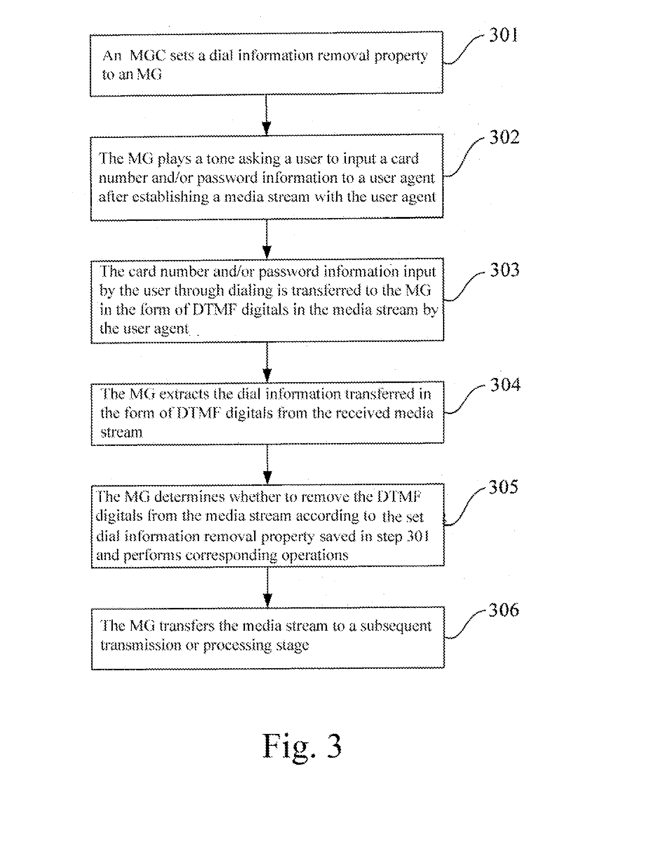

Fig.3 illustrates a procedure according to another embodiment of the present invention. According to the embodiment, an MG functions as a media server to interact with a user to implement the input of a card number and/or a password. The specific procedure is described in detail as follows:
Step 301: An MGC sets dial information removal property to the MG, where the MG saves the setting for a subsequent process.
Step 302: The MG plays a tone asking a user to input a card number and/or password information to a user agent after establishing a media stream with the user agent.
Step 303: The card number and/or password information input by the user through dialing is sent by the user agent to the MG, where the information is transferred in the form of DTMF digital through the media stream.
Step 304: The MG extracts the dial information from the received media stream, as the card number and/or password input by the user for a subsequent process.
Step 305: The MG determines whether to remove the DTMF digital from the media stream according to the set dial information removal property saved in step 301, and performs corresponding operations.
Step 306: The MG sends the media stream to a subsequent transmission (for example, other terminations) or processing (for example, code conversion) stage.

According to the preceding embodiment of the invention, the MGC sends a command to the MG as required, to set the dial information removal property, so that the dial information property in the media stream can be removed or remained by the MG according to the set value of the property.

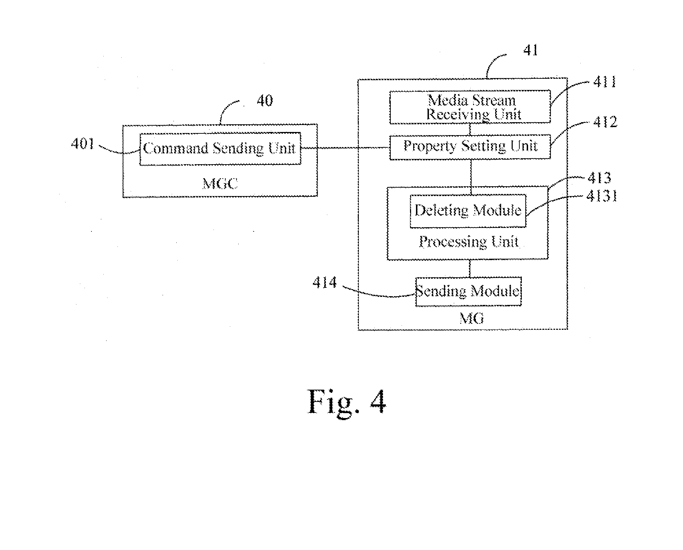

Fig.4 is a schematic diagram illustrating a system according to an embodiment of the present invention. The system includes an MGC 40 and an MG 41.

The MGC includes a command sending unit 401 that is configured to send a command to the MG 41 to instruct the MG to set the dial information removal property. The command may be an Add command, a Move command, a Modify command or the like.

The MG 41 includes a media stream receiving unit 411, a property setting unit 412, a processing unit 413 and a sending module 414.

The property setting unit 412 is configured to set a dial information removal property according to the command of the MGC 40 or to preset a dial information removal property on the MG 41.

The media stream receiving unit 411 is configured to receive the media stream.

The processing unit 413 is configured to process, when receiving the dial information carried in the media stream, the dial information according to the dial information removal property set by the property setting unit 412, and then send the media stream to a subsequent transmission (for example, other terminations) or processing (for example, code conversion) stage. The processing unit 413 further includes a deleting module 4131. The deleting module 4131 is configured to remove the dial information from the media stream when the value of the dial information removal property set by the property setting unit 412 is "ON", or remain the dial information in the media stream when the value of the dial information removal property set by the property setting unit 412 is "OFF". When the dial information removal property is not set, a process is performed according to the default value "OFF" of the dial information removal property.

The sending module 414 is configured to send the media stream to a subsequent transmission or processing stage after the processing unit 413 removes the dial information from the media stream or remains the dial information in the media stream.

According to the preceding embodiment of the invention, the MGC sends a command to the MG to set the dial information removal property as required, so that the dial information property in the media stream can be removed or remained by the MG according to the set value of the property.

With the description of the preceding embodiments, it is apparently appreciated by persons skilled in the art that the invention can be implemented in hardware or in software plus a necessary general hardware platform. Accordingly, the technical solutions of the present invention can be embodied in a software product. The software product may be stored in a nonvolatile storage medium such as a CD-ROM, a USB disc or a removable hard disc, containing a plurality of instructions for making computer equipment such as a personal computer, a server or network equipment to execute the methods according to the embodiments of the present invention.

In summary, the preceding description is made only to the preferred embodiments of the present invention, and is not intended to limit the scope of protection of the present invention. Various modifications, equivalent substitutions and improvements fall within the protection scope of the present invention without departing from the principles of the present invention.

## Claims

1. A method for processing dial information in a media stream, comprising:
receiving, by a media gateway, a media stream carrying dial information; and
remaining or removing the dial information carried in the media stream according to a dial information removal property, wherein the dial information removal property is set by the media gateway according to an instruction from a media gateway controller, or is preset on the media gateway.

2. The method according to claim 1, wherein the step of remaining or removing the dial information carried in the media stream according to a dial information removal property comprises:
removing the dial information from the media stream when the value of the dial information removal property is set to "ON"; or
remaining the dial information in the media stream when the value of the dial information removal property is set to "OFF"; or
processing the dial information according to the default value "OFF" of the dial information removal property when the dial information removal property is not set.

3. The method according to claim 1, wherein the dial information removal property is set by the media gateway according to an instruction from a media gateway controller by performing the step of:
carrying, by the media gateway controller, the dial information removal property in a LocalControl descriptor for the media stream and sending the dial information removal property to the media gateway to instruct the media gateway to process the dial information carried in the media stream according to the dial information removal property.

4. The method according to claim 3, wherein the LocalControl descriptor is carried in one of the following commands: an Add command, a Move command and a Modify command to be sent to the media gateway.

5. The method according to any one of claims 1-4, further comprising:
sending, by the media gateway, the dial information carried in the media stream to a subsequent transmission or processing stage after the dial information is processed.

6. A media gateway, comprising:
a property setting unit, configured to set a dial information removal property according to an instruction from a media gateway controller or to preset a dial information removal property on the media gateway; and
a processing unit, configured to remove the dial information from the media stream or remain the dial information in the media stream according to the dial information removal property when a media stream carrying dial information is received.

7. The media gateway according to claim 6, wherein the processing unit comprises:
a removing module, configured to remove the dial information from the media stream when the value of the dial information removal property set by the property setting unit is "ON".

8. The media gateway according to claim 6, further comprising:
a media stream receiving unit, configured to receive the media stream.

9. The media gateway according to claim 6, further comprising:
a sending module, configured to send the media stream to a subsequent transmission or processing stage after the processing unit removes the dial information from the media stream or remains the dial information in the media stream.

10. A media gateway controller, comprising:
a command sending unit, configured to send a command to a media gateway to instruct the media gateway to set a dial information removal property.

11. A system for processing dial information in a media stream, comprising a media gateway controller and a media gateway, wherein
the media gateway controller is configured to send a command to the media gateway to instruct the media gateway to set a dial information, removal property, and
the media gateway is configured to set the dial information removal property according to the instruction from the media gateway controller or to preset a dial information removal property on the media gateway, and remove the dial information from the media stream or remain the dial information in the media stream according to the dial information removal property when the media stream carrying the dial information is received.

12. The system according to claim 11, wherein the media gateway is further configured to receive the media stream, and send the media stream to a subsequent, transmission or processing stage after removing the dial information from the media stream or remaining the dial information in the media stream.
